# EUROPEAN PATENT SPECIFICATION

(11) **EP 3 497 060 B1**
(45) Date of publication and mention of the grant of the patent: **29.07.2020**
(21) Application number: 17801791.9
(22) Date of filing: 08.08.2017
(51) Int. Cl.: C01G 9/00, C08K 3/014, C08K 3/26

(54) **SYNTHETIC HYDROTALCITE**
SYNTHETISCHES HYDROTALCIT
HYDROTALCITE SYNTHÉTIQUE

(30) Priority: 08.08.2016 IN 201621026990
(43) Date of publication of application: 19.06.2019
(73) Proprietor: Heubach Colour Pvt. Ltd., Ankleshwar - 393002, Gujarat (IN)
(72) Inventor: SEVAK, Jashvant Ishvarlal, Ankleshwar - 393002 Gujarat (IN)
(74) Representative: Barker Brettell LLP
(86) International application number: PCT/IN2017/050329
(87) International publication number: WO 2018/029704

(56) References cited:
- WO-A1-2012/081770
- US-A1- 2015 218 009
- US-B1- 6 313 208

## Description

### TECHNICAL FIELD:

This invention is related to a method for manufacturing a synthetic hydrotalcite having formula (I):

**Mg_{X}Zn_{Y}Ca_{Z}Al₂(OH)₁₃CO₃4H₂0;**

where X = 3-4, Y= 0.5 -1.5, and Z = 0.2- 3.5
the said synthetic hydrotalcite having
19 to 22 % of Al₂O₃, 13 to 32 % of MgO, at least 0.2 % of CaO, and at least 3 % of Zn;
BET in the range of 12 to 15 m²/gm;
Particle size in the range of 0.5 to 0.9 micron, and
Impurity profile having Iron content in the range of 80 to 150 ppm, Chromium in the range of 25 to 50 ppm, Cobalt in the range of 350 to 500 ppm and Nickle in the range of 10 to 20 ppm.

An "eco-green" (i.e. an economically efficient, yet technically feasible and, through avoidance of waste disposal, ecologically sustainable) route for synthesis of one pack stabilizer system comprising hydrotalcite from industrial waste is an added advantage of the current invention. Industrial waste used are industrial waste with Aluminium content 1-5 %, industrial waste with Soda Ash concentration 20 % max and used Zinc catalyst

### BACKGROUND OF THE INVENTION:

Hydrotalcite is a natural mineral composed of magnesium and aluminium with a layered structure. It's formula is Mg₆Al₂(OH)₁₆CO₃.4H₂O. Because of its inherent characteristics, it has been used in pharmaceutical applications initially. In recent years it is widely used in plastic industry as a stabilizer in PVC and Polyolefin.

Hydrotalcite is an effective heat stabilizer as it neutralizes hydrochloride that gets released in PVC by ion exchange reactions. In Polyolefin, PP and PE applications, it is used as heat stabilizer or as an acid-acceptor of resin. It is known that a resin composition containing Hydrotalcite is particularly superior in thermal insulating property and thermal stability and this resin composition can be used in applications such as film for agricultural use and a resin for covering wires.

Although the hydrotalcite particles as disclosed in the existing art have properties suitable for giving a moulded article having an excellent heat deterioration resistance when contained in a resin, it has been found that the hydrotalcite particles still have problems to be solved along with recent growing requirements for the properties of the particles in spite of the fact that the amount of the hydrotalcite particles to be contained in a resin is very small. There is a strong demand that the hydrotalcite particles have excellent stability against heat and ultraviolet light for resins.

Kyowa Chemical Industry Co. Ltd. have conducted further studies on effect of the amounts of specific metal compounds as impurities contained in hydrotalcite particles and the shape of the particle upon heat deterioration and physical properties in EP 0 933 401 (equivalent US 6,313,208). It discloses a synthetic resin composition with heat deterioration resistance. The composition comprising 100 parts by wt. of a synthetic resin and 0.001 to 10 parts by wt. of hydrotalcite particles defined by the following (i) to (iv) :
(i) Hydrotalcite particles are represented by the following chemical structure formula (1) {(Mg)_{y}(Zn)_{z}}₁₋ₓ(Al)ₓ(OH)₂(Aⁿ⁻)ₓ/n.mH₂O (1)
(ii) Hydrotalcite particles have an average secondary particle diameter of 2µm or less;
(iii) Hydrotalcite particles have a specific surface area (measured by a BET method) of 1 to 30 m²/g; and
(iv) Hydrotalcite particles contain an iron compound and a manganese compound in a total amount of 0.02 wt% or less in terms of metals (Fe + Mn). This patent also discloses a molded article formed from the claimed resin composition with excellent heat deterioration resistance and impact resistance and satisfactory in the dispersibility of hydrotalcite particles.

In this patent, patentee had emphasized and also claimed that specific impurities present in hydrotalcite particles, particularly limited to values smaller than predetermined values exert a marked function on heat deterioration and that the particle diameter and specific surface area of the hydrotalcite particle also have influence upon heat deterioration.

WO 92/13914 discloses hydrocalumites (i.e. AlCaₓ(OH)₂ₓ₊₃.mH₂O in which x= 1 to 4 and m=0 to 8) as PVC stabilizers. It's zinc free system. Carbonate-containing homologs are also not mentioned herein. Co-precipitation method is used in the synthesis of hydrocalumites, which leads to additional salt ballasts in wastewater.

EP 0 930332 uses tricalcium hydroxodialuminate for zinc-free systems as one of the component of the stabilizer system in polymer containing chlorine.

WO93/25613 describes the preparation of katoites (i.e. Ca₃Al₂(OH)₁₂). Katoites used as stabilizers for polymers are made from chlorine-containing olefins. The stabilizer mixture contains zinc soaps, calcium soaps and/or calcium complexes of 1,3-diketones and katoites. The synthesis of katoites proceeding from calcium hydroxide and aluminium hydroxide is also described in DE 2 424 763. Flame-retarding action in thermoplastics, especially polystyrene, HDPE, PVC, SBR and EVA, is also demonstrated herein.

Hydrotalcite particles are industrially produced from a magnesium source material, aluminium source material and alkali source material as main source materials, and these source materials mostly rely on natural resources or processed products thereof.

### Various processes disclosed in the existing art are as follows:

Turriziani & Schippa [Ric. Sci. 26, 2792, (1956)] have isolated and characterized Tetracalcium monocarbonate dodecahydroxodialuminate. The synthetic route is costly with low yield and inconvenient (leaching of cement pastes).

JPCA Res. & Devel. Lab. (Portland Cement Assoc.) 4, 2 (1962) describes a method for synthesis of Ca₄Al₂(OH)₁₃(CO₃)_{0.5}^{∗}8H₂O by reacting Ca₃Al₂O₆ with Ca(OH)₂ in water. However, the product is formed after a 6-month reaction time through a side reaction with the CO₂ from the air.

Act. Cryst. C54, 1214 (1998) describes Ca₄Al₂(OH)₁₂CO₃^{∗}5H₂O in a three-component solid-state synthesis proceeding from Ca(OH)₂, Al(OH)₃ and CaCO₃ at 120° C. and a pressure of 2 kbar. The reaction time is 4 weeks. This study also includes an X-ray structure analysis.

J. Res. NBS (National Bureau of Standards) 64A, 333 (1960) discloses process of monocalcium aluminate by burning Al(OH)₃ and CaCO₃ at 1250° C for several hours after mixing with Ca(OH)₂ and Na₂CO₃.

J. Mater. Chem. 6 (1), 103 (1996) and Chem. Mater. 13, 3507 (2001) disclose a practicable method for preparing tetracalcium monocarbonate dodecahydroxodialuminate hydrate. In this reported method, calcium nitrate is reacted with aluminium nitrate in the presence of sodium hydroxide solution and sodium carbonate solution in one step, the resulting gel being aged at 65° C for 24 hours. However, this co-precipitation process uses expensive reactants and hence not industrially feasible. Further, this process is also not very environment friendly, since considerable salt burdens are obtained in the wastewater.

None of these synthesis methods have any industrial significance whatsoever, since there are reaction times of several weeks, temperatures of more than 1000° C. or a low yield, such that the majority can only be referred to as methods of formation.

The existing prior arts disclose processes for the preparation of hydrotalcite using purer compounds of aluminium and magnesium with or without desired specification for lower particle size. Some reported processes having drawbacks like the existing processes are costly; existing arts create disposal problem of ecologically unsafe waste; lengthy process time and uses higher crystallization time as well as higher temperature under autogeneous pressure.

However, there are following existing arts which discloses the various green processes which utilizes industrial waste for the preparation of hydrotalcite.

US2015218009 (A1) publication discloses invention titled "Novel process for preparation of synthetic hydrotalcite from industrial waste". This process for preparation of synthetic hydrotalcite uses three industrial wastes such as aluminium chloride waste-generated in any of reaction where anhydrous aluminium chloride is used as Lewis acid catalyst such as Friedel Crafts reaction, bittern containing magnesium compounds generated in solar salt work using brines such as sea brine and subsoil brines containing magnesium, and ammonium carbonate solution generated in organic pigment industries such as producers of copper phthalocyanine green. The process involves preparation of aluminium precursor and removing metallic impurities present in Aluminium hydroxide prepared from aluminium chloride containing waste, preparation of magnesium precursor, mixing the precursors, hydro-thermally treating the mixture and adding surface modifying agents followed by filtration and drying.
CN104743601 discloses a method for producing copper-aluminiumhydrotalcite from copper-containing waste water through intercalation. The method comprises the following steps: by taking copper in the copper-containing waste water as a metering standard, feeding calcium aluminate chloride hydrate according to the condition that the mass ratio of copper to calcium aluminate chloride hydrate is 1:(10-20), reacting at normal temperature for 8-96 hours, separating out precipitates, and drying under the conditions of 80-500°C, so as to obtain copper-aluminiumhydrotalcite.
CN102974311 (A) discloses a method for synthesizing organic hydrotalcite by using industrial acid washing wastewater and printing and dyeing wastewater.
The method comprises the following steps of:
enabling a divalent ion molar concentration to be 2-4 times of a trivalent ion molar concentration through adjustment; dripping 50-70% KOH solution in the acid washing wastewater, so as to separate sediments; preparing turbid liquid by using the separated sediments, wherein a solid-liquid ratio is in a range from 1: 4 to 1: 8; continuously dripping 50-70% KOH solution until the pH value reaches 10-13; aging 24-48 hours at room temperature and separating the sediments; adding the sediments into the printing and dyeing wastewater, wherein a solid-liquid mass ratio is in a range from 1: 1000 to 1: 5000, and stirring the mixture for 3-4 hours, so as to separate the sediments; and drying the mixture at a temperature of 70-90°C, so that the organic hydrotalcite is prepared by using metal ions in acid washing water and negative ions in printing and dyeing wastewater. The waste recovery can be realized; and meanwhile, heavy metal ions, acid and dyes in the acid washing wastewater can be removed.

WO 2012/081770 A1 discloses a method for manufacturing a synthetic hydrotalcite containing Ca, Mg and Zn by a hydrothermal method.

Heubach Colour Pvt. Ltd is the manufacturer of Copper Phthalocyanine Green and Blue (hereinafter referred to as CPC Green and CPC Blue). The raw materials for CPC Green Plant are aluminium chloride, cupric chloride, crude CPC Blue, chlorine, caustic soda. During the course of manufacture of CPC green, mother liquor emerges. This mother liquor of CPC Green mainly contains aluminium chloride, copper etc. and is treated with sodium sulphide to remove copper as copper sulphide. The resultant clear mother liquor which is free from copper and other impurities is neutralized with soda ash solution to get aluminium hydroxide slurry. The slurry is filtered in filer press, washed and dried to get aluminium hydroxide powder. Soda Ash solution is generated from industrial waste with soda ash concentration 20% max. Zinc is widely used in industries as catalyst and the same is recovered as zinc hydroxide from industrial waste.

No method exists by which one can utilize Aluminium Hydroxide, as recovered in CPC Green manufacturing, soda ash solution is generated from industrial waste and Zinc Hydroxide recovered from Industrial waste to synthesise hydrotalcite with Al2O3(19 to 25%), MgO (13 to 32 %), CaO (at least 0.2 %), and Zn (at least3 %). Hydrotalcite has BET in the range of 12 to 15 m²/gm with particle size in the range of 0.5 to 0.9 micron, Iron content (80to 150ppm), Chromium (25 to 50 ppm), Cobalt (300 to 4500 ppm) and Nickle(10 to 20 ppm). This hydrotalcite has industrial utility as one pack stabilizer system useful for polymeric applications, particularly in PVC and polyolefin polymer and master batch thereof.

### OBJECTS OF THE INVENTION:

A synthetic hydrotalcite having formula (I):

**Mg_{X}Zn_{Y}Ca_{Z}Al₂(OH)₁₃CO₃4H₂0;**

where X = 3-4, Y= 0.5 -1.5, and Z = 0.2 - 3.5
the said synthetic hydrotalcite having
19 to 22% of Al₂O₃, 13 to 32 % of MgO, at least 0.2 % of CaO, and at least 3 % of Zn;
BET in the range of 12 to 15 m²/gm;
Particle size in the range of 0.5 to 0.9 micron; and
Impurity profile having Iron content in the range of 80 to 150 ppm, Chromium in the range of 25 to 50 ppm, Cobalt in the range of 300 to 500 ppm and Nickle in the range of 10 to 20 ppm is disclosed in the present application.

A one pack stabilizer system for polymeric applications is also disclosed, said system comprising synthetic hydrotalcite of the invention along with Stearoyl Benzoil Methane (Rhoda Stab 55 P), Tetrakis(methylene(3,5-di-tert-butyl-4-hydroxyhydrocinnamate))methane (Anox-20), Lauric Acid, Titanium dioxide, Fatty acid methyl ester and Calcium Carbonate etc.

An object of the invention is to provide an "eco-green" process for manufacturing of said synthetic hydrotalcite of formula (I) from aluminium hydroxide, magnesium chloride, Soda ash and zinc hydroxide waste; which is recovered from mother liquor of CPC Green; bittern and used zinc catalyst; thereby making the process cost-effective.

### BRIEF DESCRIPTION OF THE ACCOMPANYING DRAWINGS:

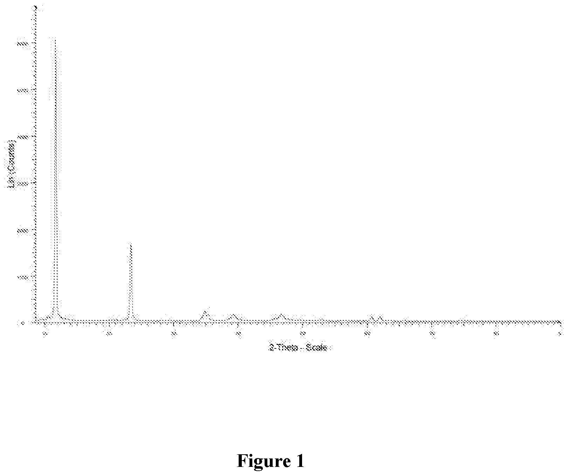

Figure 1 of the present invention illustrates X-ray powder diffraction (XRD) pattern of a standard hydrotalcite; prepared according to the example 1.

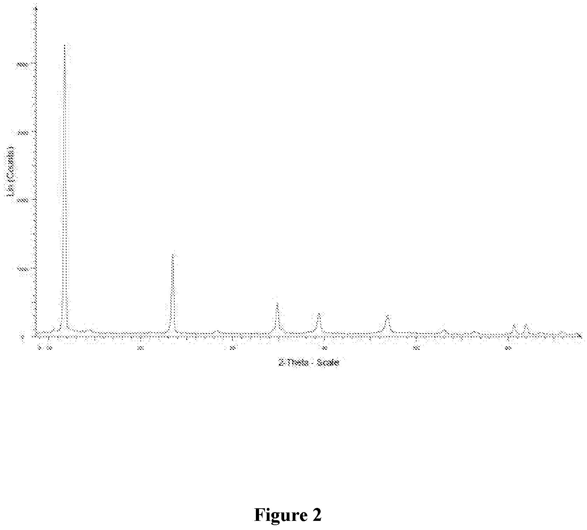

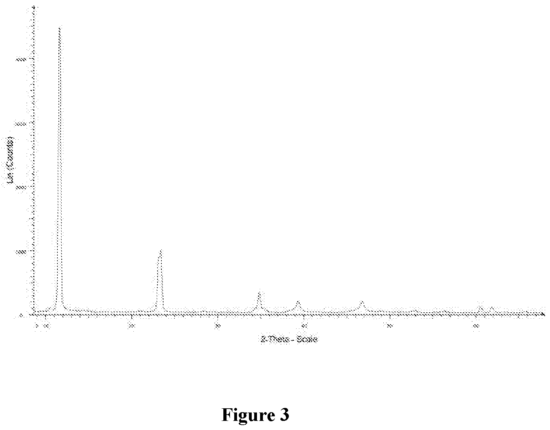

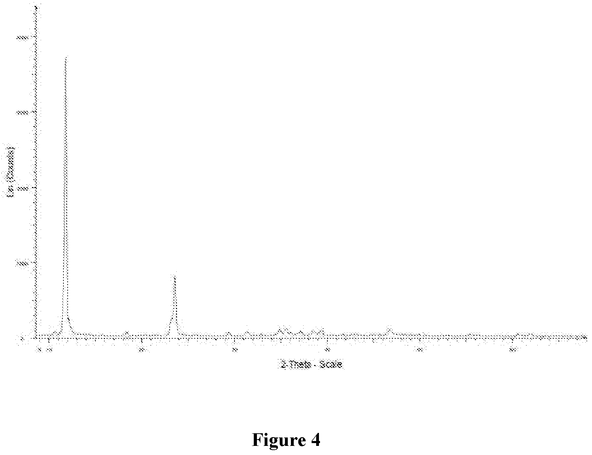

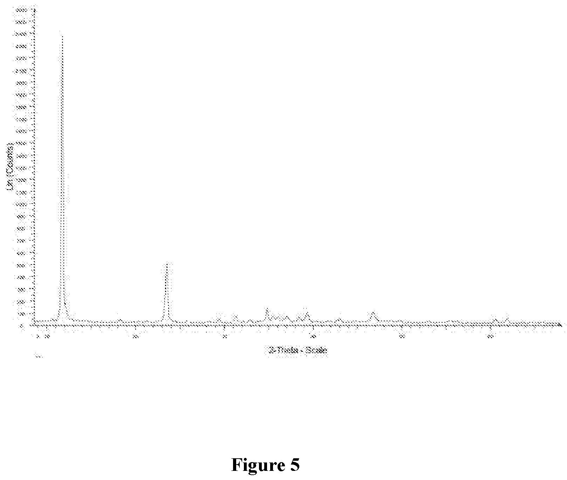

Figures 2 to 5 of the present invention illustrates X-ray powder diffraction (XRD) pattern of a synthetic hydrotalcite; prepared according to the examples 1 to 5.

### DETAILED DESCRIPTION OF THE INVENTION:

Before the present invention is described, it is to be understood that unless defined otherwise, all technical and scientific terms used herein have the same meaning as commonly understood by one of ordinary skill in the art to which this invention belongs. Unless stated to the contrary, any use of the words such as "including," "containing," "comprising," "having" and the like, means "including without limitation" and shall not be construed to limit any general statement that it follows to the specific or similar items or matters immediately following it. The described embodiments of the invention and the disclosed examples are given for the purpose of illustration rather than limiting of the scope of invention.

It is also understood that the terms "a", "an", "the" and the like are words for the sake of convenience and are not to be construed as limiting terms. Moreover, it will be understood that the illustrations are for the purpose of describing a particular exemplary embodiment of the invention and are not limited to the invention thereto.

According to a preferred embodiment, there is provided a synthetic Hydrotalcite having formula (1);

**Mg_{X}Zn_{Y}Ca_{Z}Al₂(OH)₁₃CO₃4H₂0;**

where X = 3-4, Y= 0.5 -1.5, and Z = 0.2 - 3.5
the said synthetic hydrotalcite having
19 to 22 % of Al₂O₃, 13 to 32 % of MgO, at least 0.2 % of CaO, and at least 3 % of Zn; BET in the range of 12 to 15 m²/gm;
Particle size in the range of 0.5 to 0.9 micron, and
Impurity profile having Iron content in the range of 80 to 150 ppm, Chromium in the range of 25 to 50 ppm, Cobalt in the range of 350 to 500 ppm and Nickle in the range of 10 to 20 ppm.

Synthetic hydrotalcite having formula (1) prepared according to the process of the invention is tested for XRD analysis that is carried out on Bruker machine in powder form. The characteristic peaks of the synthetic hydrotalcite at 2θ is 11.5 (100%), 23.3, 34.6, 39.2, 46.3 and 46.8.

According to an embodiment of the invention, there is provided a method for manufacturing of the synthetic hydrotalcite of formula (1); the said process comprising
1. Reacting aluminium chloride with 10% magnesium chloride aqueous solution in 13:8 (v/v) in presence of 10 % sodium carbonate solution in continuous process followed by filtration to obtain a wet cake consisting of aluminium and magnesium carbonate and oxy carbonate containing 13-15 % of Al₂O₃ and 15-20 % of MgO and washing the wet cake with water to remove chloride ions;
2. Preparing homogeneous slurry by mixing the wet cake as obtained in Step (1) in water (0.8:5 wt/v) along with 0.25 to 0.75 wt/v of zinc hydroxide and 0.04 to 0.40 wt/v of calcium carbonate followed by passing through the milling system to reduce the particle size of the slurry to < 5 micron;
3. Mixing slowly the slurry with 50 Litre of (20 %) caustic lye solution at controlled temperature of 50°C and adding 0 to 0.30 wt/v of calcium carbonate to it followed by subjecting the slurry to hydrothermal treatment at temperature of 150 to 170°C and under pressure of 8 Kg for 5 hrs;
4. After hydrothermal treatment, adding 5 % additives like lubricant, plasticizer, dispersing agent etc. to the mixture of step (3) followed by cooling down to 70°C and filter pressing to obtain a wet cake; and
5. Washing the wet cake with water till pH of the filtrate is adjusted to 8 followed by drying the cake in tray dryer to obtain hydrotalcite of formula (1).

According to another embodiment of the invention, the said method may utilize industrial waste for manufacturing of the synthetic hydrotalcite of formula (1) thus becoming an "eco-green" method.

The present invention is demonstrated by using mother liquor generated during the manufacture of Copper Phthalocyanine (CPC) pigments namely CPC Green, however, it is possible to recover Aluminium Hydroxide from any industrial waste which contains Aluminium Chloride, Aluminium Sulphate, Aluminium Carbide or any other Aluminium salt in it, irrespective of source of waste. Thus, the scope of the invention intends to cover the recovery of Aluminium Hydroxide from any waste which contains Aluminium Chloride, Aluminium Sulphate, Aluminium Carbide or any other Aluminium salt in it but free from other impurities by the process as claimed in the application.

According to the invention, mother liquor is separated from CPC Green manufacturing plant and is used as source of Aluminium Hydroxide. Mother liquor of the CPC Green mainly contains Aluminium Chloride, Copper etc. and is treated with Sodium Sulphide to get copper as Copper Sulphide, which is separated out. The resultant clear mother liquor, which is free from copper and other impurities, is neutralized with soda ash solution to get Aluminium Hydroxide slurry. The slurry is filtered in filer press, washed and dried to get Aluminium Hydroxide. Aluminium Hydroxide thus obtained is used in the present invention.

According to the invention, ammonium carbonate solution generated in organic pigment industries such as producers of copper phthalocyanineblue is used to prepare 20 % soda ash solution. In this, caustic lye is treated with ammonium carbonate solution in a tank and further stripped with steam to get 20 % soda ash solution and 25 % aqueous ammonia.

According to the invention, zinc hydroxide waste collected from industrial waste is used as precursor of zinc hydroxide. Zinc is widely used in industries as catalyst and same is recovered as zinc hydroxide by conventional method.

According to the preferred embodiment of the invention, there is provided an "eco-green" method for the manufacture of synthetic hydrotalcite having formula (1);
wherein said process comprises
I. preparing aluminium chloride precursor by treating mother liquor of CPC Green mainly containing aluminium chloride, sodium chloride, cupric chloride, etc. with sodium sulphide in the molar ratio of 1: 1.2 to get copper as copper sulphide; separating copper sulphide by filtration to obtain clear mother liquor free from copper and other impurities; treating mother liquor with chelating agent or carbon to remove residual inorganic and organic impurities and obtain the filtrate having pure aluminium chloride precursor;
II. preparing 20 % soda ash solution by treating ammonium carbonate solution generated in organic pigment industries such as producers of copper phthalocyanineblue with caustic lye (sodium hydroxide) in an ammonia recovery plant by steam stripping to get 20 % soda ash solution;
III. preparing zinc hydroxide from used waste zinc catalyst by treating it with 20 % solution of sodium hydroxide;
IV. reacting aluminium chloride precursor and 10 % magnesium chloride aqueous solution in ratio of 13:8 (v/v) and treating the said mixture with 10 % of sodium carbonate solution in continuous process followed by filtration to obtain a wet cake consisting of aluminium and magnesium carbonate and oxy carbonate containing 13- 15 % of Al₂O₃ and 15 - 20 % of MgO and washing the wet cake with water to remove chloride ions;
V. preparing homogeneous slurry by mixing the wet cake as obtained in Step (1) in water (0.8:5 wt/v) along with 0.25 to 0.75 wt/v of zinc hydroxide and 0.04 to 0.40 wt/v of calcium carbonate followed by passage through the milling system to reduce the particle size of the slurry to < 5 micron;
VI. mixing slowly the slurry with 50 Litre of 20 % caustic lye solution at controlled temperature of 50°C and adding 0 to 0.30 wt/v of calcium carbonate to it followed by subjecting the slurry to hydrothermal treatment at temperature of 150 to 170°C and under pressure of 8 Kg for 5 hrs;
VII. after hydrothermal treatment, adding 5 % additives like lubricant, plasticizer, dispersing agent etc. to the mixture of step (3) followed by cooling down to 70°C and filter pressing to obtain a wet cake; and
VIII. washing the wet cake with water till pH of the filtrate adjusted to 8 followed by drying the cake in tray dryer to obtain hydrotalcite of formula (1).

According to another embodiment there is also provided a one pack stabilizer system comprising the synthetic hydrotalcite having formula (I) of the invention along with other conventional ingredients.

There is provided also a one pack stabilizer system for polymeric applications; said system comprising synthetic hydrotalcite of the formula (I) of the invention along with Calcium Stearate, Zinc Stearate, Stearoyl Benzoil Methane (Rhoda Stab 55 P), Tetrakis(methylene(3,5-di-tert-butyl-4-hydroxyhydrocinnamate))methane (Anox-20), Lauric Acid, Titanium dioxide, Fatty acid methyl ester and Calcium Carbonate etc.

Preferably; said stabilizer system comprising 68 to 71% of synthetic hydrotalcite prepared according to the invention along with 8 to 9 % of Calcium Stearate, 11 to 12 % of Zinc Stearate 0.1 to 2 % of Stearoyl Benzoil Methane (Rhoda Stab 55 P), 1 to 5 % of Tetrakis(methylene(3,5-di-tert-butyl-4-hydroxyhydrocinnamate))methane (Anox-20), 3 to 4% of Lauric Acid, 0 to 1.5 % of Titanium dioxide, and 0 to 6 % of Calcium Carbonate etc.

This one pack stabilizer system is useful for polymeric applications, particularly in PVC and polyolefin polymer and master batch thereof.
Similarly, there is provided standard one pack stabilizer system which comprising standard hydrotalcite namely, Magnesium Aluminium Hydroxide Carbonate Hydrate or Aluminium-magnesium-zinc-carbonate-hydroxide along with Calcium Stearate, Zinc Stearate, Stearoyl Benzoil Methane(Rhoda Stab 55 P), Tetrakis(methylene(3,5-di-tert-butyl-4-hydroxyhydrocinnamate))methane (Anox-20), Lauric Acid, Titanium dioxide, Fatty acid methyl ester and Calcium Carbonate etc.
Particularly, said standard stabilizer system comprising standard hydrotalcite namely, Magnesium Aluminium Hydroxide Carbonate Hydrate or Aluminium-magnesium-zinc-carbonate-hydroxide have impurity profile of Chromium 12 PPM , Iron 29 ppm , Cobalt 23 PPM, Nickel < 2 ppm, Particle size of 0.47 µm, and BET surface area of 9.5 m2/gm, which are used in the preparation of master batch

Particularly, the standard stabilizer system comprising 68 to 71 % of standard hydrotalcite namely, Magnesium Aluminium Hydroxide Carbonate Hydrate or Aluminium-magnesium-zinc-carbonate-hydroxide along with 8 to 9 % of Calcium Stearate, 11 to 12 % of Zinc Stearate 0.1 to 2 % of Stearoyl Benzoil Methane (Rhoda Stab 55 P), 1 to 5 % of Tetrakis(methylene(3,5-di-tert-butyl-4-hydroxyhydrocinnamate))methane (Anox-20), 3 to 4% of Lauric Acid, 0 to 1.5 % of Titanium dioxide, and 0 to 6 % of Calcium Carbonate etc.
According to an embodiment, there is provided master batches of PVC by using one pack stabilizer system of the invention; said master batches comprises PVC, plasticizer namely, Bis(2-Ethylhexyl) Phthalate, Calcium Carbonate, Stearic Acid, one pack stabilizer system of the invention and Wax.
Particularly, the master batches of PVC comprising 100 Phr of PVC, plasticizer namely, 50 Phr of Bis(2-Ethylhexyl) Phthalate, 30 Phr of Calcium Carbonate, 0.5 Phr of Stearic Acid, 5 Phr of one pack stabilizer system of the invention, 2 Phr of Wax.
The master batches are prepared by compounding all ingredients in Two Roll Mill at 165°C. Similarly standard master batches of PVC are prepared by using all the components except replacing one pack stabilizer system comprising synthetic hydrotalcite prepared according to the invention with standard stabilizer system comprising standard hydrotalcite namely, Magnesium Aluminium Hydroxide Carbonate Hydrate or Aluminium-magnesium-zinc-carbonate-hydroxide.
All master batches of PVC having one pack stabilizer system of the invention were tested for thermal stability, colour hold and electrical properties by preparing the sheet on two roll mill at 165°C and compared with benchmarking standard master batches of PVC. The results are tabulated in Table 3. We have given impurities profile, particle size and surface area of synthetic hydrotalcite of the invention prepared according to examples 3, 4 and 5. According to Table 3, master batches with synthetic hydrotalcite of the invention prepared according to examples 3, 4 and 5 give superior results over standard hydrotalcite irrespective of higher impurities than that of standard hydrotalcite.

We have also prepared Polyolefin master batches, particularly Polypropylene master batches comprising Polypropylene, Irganox 1076, Irganox 168 and a synthetic hydrotalcite of the invention as stabilizer. Similarly, we have also prepared standard polypropylene master batches by using all the component except replacing synthetic hydrotalcite prepared according to the invention with standard hydrotalcite namely, Magnesium Aluminium Hydroxide Carbonate Hydrate or Aluminium-magnesium-zinc-carbonate-hydroxide as stabilizer. We have conducted comparative study between polypropylene master batches comprising synthetic hydrotalcite having formula (I) of the invention as a stabiliser and benchmarking standard hydrotalcite as stabilizer.
The results are tabulated in Table 5. Thus, results emphasize that there is no correlation of impurities profile, particle size and surface area of synthetic hydrotalcite on the properties of the master batches including thermal stability.

According to the comparative study, hydrotalcite having formula (I) prepared according to the invention as a stabiliser is superior in performance as compared to existing stabilisers. Further, liquid mixed PVC stabilisers are expensive and contain heavy metals. Thus, we can replace liquid mixed PVC stabilisers with the current stabilizer system. Therefore, the current invention eliminates the problems associated with existing PVC stabiliser.
An "eco-green" route for synthesis of one pack stabilizer system comprising hydrotalcite from industrial waste is added advantage of the current invention. Industrial waste used are industrial waste with Aluminium content 1-5 %, industrial waste with soda ash concentration 20 % max and used Zinc catalyst.
The present invention is illustrated by the following example, which is not intended to limit the effective scope of the invention.

### EXAMPLES:

### ANALYTICAL METHODS USED:

BET Measurement Method: (ISO 9277: 2010)
Particle Size analysis: (ISO 13320: 2009)
Impurity profile analysis: Atomic Absorption Spectrometer by PerkinElmer Analyst 400 XRD analysis : Bruker XRD (D8) Advance.

**Example 1** (not according to the invention)

### Standard Hydrotalcite

In MSRL reactor, 130 Litre of Aluminium Chloride and 80 Litre of 10 % Magnesium Chloride solution were reacted in presence of 10 % sodium carbonate solution in continuous process. The reaction mixture was further subjected to filter press. Wet cake so obtained was washed with water to remove chloride ion. The wet cake contains Aluminium and Magnesium carbonate and oxy carbonate (3.5 % of Al₂O₃ and 19 % of MgO).
In another SS Reactor, the wet cake (100 Kg) containing 13.5 % of Al₂O₃ and 19 % of MgO so obtained was charged in 500 litre of water and it was mixed to make homogeneous slurry. The slurry was passed through the milling system to reduce the particle size to < 5 micron. 50 Litre20 % of caustic lye solution was added slowly to it at controlled temperature of 50° C. The slurry was taken to autoclave and subjected to hydrothermal treatment at temperature of 170°C and pressure of 8 Kg for 5 hrs to obtain synthetic hydrotalcite.
After hydrothermal treatment, 3 % (on dry basis)Fatty acid methyl esters and 2 % (on dry basis) Polyethylene Wax AC 16 A (by Honeywell) was added to the reaction mixture. The reaction mixture was cooled to 70°C and filter pressed. The filter cake was washed with water to adjust the pH of the filtrate to 8 followed by drying the cake in tray dryer. The dried powder is analysed and following is the analysis report:

| | |
|---|---|
| Al₂O₃ | : 21.6% By titration /gravimetric |
| MgO | : 31.8 %By titration /gravimetric |
| Cao | : 0.3 % |
| BET | : 14.3 m²/gm -BET Method |
| Particle size | : 0.43micron - Lesser diffraction |
| Iron content | : 207 ppm - by AAS |
| Chromium | : 22ppm -By AAS |
| Cobalt | : 355 ppm -By AAS |
| Nickle | : 13 ppm-By AAS |
| XRD | : Figure 1 |

### Example 2 (not according to the invention)

### Synthetic Hydrotalcite

In MSRL reactor, 130 litre of Aluminium Chloride and 80 Litres of 10 % Magnesium Chloride solution were reacted in the presence of 10 % of sodium carbonate solution in continuous process. The reaction mixture was further subjected to filter press. Wet cake so obtained was washed with water to remove chloride ion. The wet cake contains Aluminium and Magnesium carbonate and oxy carbonate (14.1 % of Al₂O₃ and 17.8 % of MgO).
In another SS Reactor, the wet cake (90 Kg) containing 14.1 % of Al₂O₃ and 17.8 % of MgO so obtained was charged in 500 litre of water and it was mixed to make homogeneous slurry. This slurry was passed through the milling system to reduce the particle size to < 5 micron. 50 litres 20 % of caustic lye solution was added slowly to it at controlled temperature of 50°C.5 Kg of calcium carbonate was added to the said slurry. The slurry was taken to autoclave and subjected to hydrothermal treatment at temperature of 155°C and pressure of 8 Kg for 5 hrs to obtain synthetic hydrotalcite.
After hydrothermal treatment, 3 % (on dry basis) stearic acid was added to the reaction mixture. The mixture was cooled to 70°C and filter pressed. The filter cake was washed with water to adjust the pH of the filtrate to 8 followed by drying the cake in tray dryer. Dried powder is analysed and following is the analysis report:

| | |
|---|---|
| Al₂O₃ | : 21.5 % |
| MgO | : 27.1 % |
| CaO | : 0.8 % |
| BET | : 14.8 m²/gm |
| Particle size | : 0.5 micron |
| Iron content | : 105 ppm |
| Chromium | : 26 ppm |
| Cobalt | : 315 ppm |
| Nickle | : 14 ppm |
| XRD | : Figure 2 |

### Example 3

### Synthetic Hydrotalcite

In MSRL reactor, 130 litre of Aluminium Chloride and 80 litre of 10 % Magnesium Chloride solution were reacted in the presence of 10 % of sodium carbonate solution in continuous process. The reaction mixture was further subjected to filter press. Wet cake so obtained was washed with water to remove chloride ion. The wet cake contains Aluminium and Magnesium carbonate and oxy carbonate (13.9 % of Al₂O₃ and 17.6 % of MgO).
In another SS Reactor, the wet cake (80 Kg) containing 13.9 % of Al₂O₃ and 17.6 % of MgO so obtained was charged in 500 litre of water and it was mixed to make homogeneous slurry. In this slurry, 25 Kg of zinc hydroxide wet cake (i.e. Zinc hydroxide wet cake was obtained by treating used zinc catalyst with 20 % solution of sodium hydroxide) and 4 kg of Calcium Carbonate were added and mixed. The slurry was passed through the milling system to reduce the particle size to < 5 micron. 50 litre 20 % of caustic lye solution was added slowly to it at controlled temperature of 50°C. 5 Kg of calcium carbonate was added to the said slurry. This slurry was taken to autoclave and subjected to hydrothermal treatment at temperature of 155°C and pressure of 8 Kg for 5 hrs to obtain synthetic hydrotalcite of formula (I).
After hydrothermal treatment, 3 % (on dry basis) calcium stearate and 2 % (on dry basis) Poly vinyl silane were added to the reaction mixture. The mixture was cooled to 70°C and filter pressed. The filter cake was washed with water to adjust the pH of the filtrate to 8 followed by drying the cake in tray dryer. The dried powder is analysed and following is the analysis report:

| | |
|---|---|
| Al₂O₃ | : 20.2 % |
| MgO | : 30 % |
| CaO | : .0.8 % |
| ZnO | : 3.4 % |
| BET | : 13.42 m²/gm |
| Particle size | : 0.51 micron |
| Iron content | : 92 ppm |
| Chromium | : 31 ppm |
| Cobalt | : 373 ppm |
| Nickle | : 10 ppm |
| XRD | : Figure 3 |

### Example 4

### Synthetic Hydrotalcite

In MSRL reactor, 130 litre of Aluminium Chloride and 80 litre of 10 % Magnesium Chloride solution were reacted in the presence of 10 % of sodium carbonate solution in continuous process. The reaction mixture was further subjected to filter press. Wet cake so obtained was washed with water to remove chloride ion. The wet cake contains Aluminium and Magnesium carbonate and oxy carbonate (14.3 % of Al₂O₃ and 19.1 % of MgO).
In another SS Reactor, the wet cake (75 Kg) containing 14.3 % of Al₂O₃ and 19.1 % of MgO so obtained was charged in 500 litre of water and it was mixed to make homogeneous slurry. In this slurry, 60 Kg of zinc hydroxide wet cake (i.e. Zinc Hydroxide wet cake was obtained by treating used zinc catalyst with 20 % solution of sodium hydroxide) and 30 kg of Calcium Carbonate was added and mixed. This slurry was passed through the milling system to reduce the particle size to < 5 micron. 50 litre20 % of caustic lye solution was added slowly to it at controlled temperature of 50°C. 30 Kg of calcium carbonate was added to the said slurry. The slurry was taken to autoclave and subjected to hydrothermal treatment at temperature of 155°C and pressure of 8 Kg for 5 hrs to obtain synthetic hydrotalcite of formula (I).
After hydrothermal treatment, 5 % (on dry basis) Fatty acid methyl esters and 2 % (on dry basis) palmitic acid were added to the reaction mixture. The mixture was cooled to 70°C and filter pressed. The filter cake was washed with water to adjust the pH of the filtrate to 8 followed by drying the cake in tray dryer. The dried powder is analysed and following is the analysis report:

| | |
|---|---|
| Al₂O₃ | : 19.3 % |
| MgO | : 14.7 % |
| CaO | : 23.2 % |
| ZnO | : 9.8 % |
| BET | : 14.2 m²/gm |
| Particle size | : 0.6 micron |
| Iron content | : 99 ppm |
| Chromium | : 34 ppm |
| Cobalt | : 470 ppm |
| Nickle | : 13 ppm |
| XRD | : Figure 4 |

### Example 5

### Synthetic Hydrotalcite

In MSRL reactor, 130 litre of Aluminium Chloride and 80 litre of 10 % Magnesium Chloride solution were reacted in the presence of 10 % of sodium carbonate solution in continuous process. The reaction mixture was further subjected to filter press. Wet cake so obtained was washed with water to remove chloride ion. The wet cake contains Aluminium and Magnesium carbonate and oxy carbonate (14.5 % of Al₂O₃ and 18.1% of MgO).
In another SS Reactor, the wet cake (70 Kg) containing 14.5 % of Al₂O₃ and 18.1 % of MgO so obtained was charged in 500 litre of water and it was mixed to make homogeneous slurry. In this slurry, 75 Kg of Zinc Hydroxide wet cake (i.e. Zinc hydroxide wet cake was obtained by treating used zinc catalyst with 20 % solution of sodium hydroxide) and 40 kg of Calcium Carbonate was added and mixed. The slurry was passed through the milling system to reduce the particle size to < 5 micron. 50 litre 20 % of caustic lye solution was added slowly to it at controlled temperature of 50°C. The slurry was taken to autoclave and subjected to hydrothermal treatment at temperature of 155°C and pressure of 8 Kg for 5 hrs to obtain synthetic hydrotalcite of formula (I).
After hydrothermal treatment, 3 % (on dry basis) calcium stearate and 2 % (on dry basis) polyvinyl silane were added to the reaction mixture. The mixture was cooled to 70°C and filter pressed. The filter cake was washed with water to adjust the pH of the filtrate to 8 followed by drying the cake in tray dryer. The dried powder is analysed and following is the analysis report:

| | |
|---|---|
| Al₂O₃ | : 19.7 % |
| MgO | : 13.5 % |
| CaO | : 26 % |
| ZnO | : 12.6 % |
| BET | : 12.3 m²/gm |
| Particle size | : 0.85 micron |
| Iron content | : 90 ppm |
| Chromium | : 38 ppm |
| Cobalt | : 461 ppm |
| Nickle | : 12 ppm |
| XRD | : Figure 5 |

### Example 6

### Synthetic Hydrotalcite

### Step I: Preparing Aluminium hydroxide precursor

1300 litres of mother liquor of CPC Green mainly containing aluminium chloride, sodium chloride, cupric chloride, etc. was treated with sodium sulphide solution (20 %) in the molar ratio of 1: 1.2 to get copper as copper sulphide that was further separated by filtration to obtain clear mother liquor free from copper and other impurities. The filtrate was treated with chelating agent namely, 40 % solution of sodium diethyl dithio carbamate followed by passing through carbon column (1 cycle) to remove residual inorganic and organic impurities. Pure filtrate so obtained having pure aluminium chloride which can be used further in the preparation of synthetic hydrotalcite of formula (I).

### Step II: Preparing 20 % soda ash solution (Caustic Lye)

Ammonium carbonate solution generated in organic pigment industries such as producers of copper phthalocyanine blue was treated with caustic lye (sodium hydroxide) in an ammonia recovery plant by steam stripping to get 20 % soda ash solution which can be used further in the preparation of synthetic hydrotalcite of formula (I).

### Step III: Preparing zinc hydroxide

Used waste zinc catalyst was treated with 20 %solution of sodium hydroxide to get zinc hydroxide which can be used further in the preparation of synthetic hydrotalcite of formula (I).

### Step IV: Synthetic Hydrotalcite

In MSRL reactor, 130 litre of Aluminium Chloride precursor as obtained in step I and 80 litre of 10 % Magnesium Chloride solution were reacted in the presence of 10 % of sodium carbonate solution in continuous process. The reaction mixture was further subjected to filter press. Wet cake so obtained was washed with water to remove chloride ion. The wet cake contains Aluminium and Magnesium carbonate and oxy carbonate (14.5 % of Al₂O₃ and 18.1% of MgO).

In another SS Reactor, the wet cake (70 Kg) containing 14.5 % of Al₂O₃ and 18.1 % of MgO so obtained was charged in 500 litre of water and it was mixed to make homogeneous slurry. In this slurry, 75 Kg of Zinc Hydroxide wet cake (i.e. as obtained in step III) and 40 kg of Calcium Carbonate was added and mixed. The slurry was passed through the milling system to reduce the particle size to < 5 micron. 50 litre 20 % of caustic lye solution (i.e. as obtained in step II) was added slowly to it at controlled temperature of 50°C. The slurry was taken to autoclave and subjected to hydrothermal treatment at temperature of 155°C and pressure of 8 Kg for 5 hrs to obtain synthetic hydrotalcite of formula (I).

After hydrothermal treatment, 3 % (on dry basis) calcium stearate and 2 % (on dry basis) polyvinyl silane were added to the reaction mixture. The mixture was cooled to 70°C and filter pressed. The filter cake was washed with water to adjust the pH of the filtrate to 8 followed by drying the cake in tray dryer. The dried powder is analysed and following is the analysis report:

| | |
|---|---|
| Al₂O₃ | : 19.6 % |
| MgO | : 13.9 % |
| CaO | : 23.4 % |
| ZnO | : 12.6 % |
| BET | : 12.3 m²/gm |
| Particle size | : 0.85 micron |
| Iron content | : 103 ppm |
| Chromium | : 40 ppm |
| Cobalt | : 469 ppm |
| Nickle | : 12 ppm |
| XRD | : Figure 6 |

### Example 7

We have prepared following Ca-Zn one pack stabilizer systems as follows:
1) CB1A, CB1B and CB1C systems are prepared according to the formulation OPS/CB1 provided in the Table 1 in which hydrotalcite used in these systems were synthetic hydrotalcite of the invention prepared according to the examples 3, 4 and 5 respectively. In standard systems, CB1standard-1 and CB1 Standard-2, hydrotalcite used was the Magnesium Aluminium Hydroxide Carbonate Hydrate and Aluminium-magnesium-zinc-carbonate-hydroxide respectively.
2) CB2A, CB2B and CB2C systems are prepared according to the formulation OPS/CB2 provided in the Table 1 in which hydrotalcite used in these systems were synthetic hydrotalcite of the invention prepared according to the examples 3, 4 and 5 respectively. In standard systems, CB2 standard-1 and CB2 Standard-2, hydrotalcite used was the Magnesium Aluminium Hydroxide Carbonate Hydrate and Aluminium-magnesium-zinc-carbonate-hydroxide respectively.
3) CB3A, CB3B and CB3C systems are prepared according to the formulation OPS/CB3 provided in the Table 1 in which hydrotalcite used in these systems were synthetic hydrotalcite of the invention prepared according to the examples 3, 4 and 5 respectively. In standard system, hydrotalcite used was the aluminium-magnesium-zinc-carbonate-hydroxide. In standard system CB3 standard-1 and CB3 Standard-2, hydrotalcite used was the Magnesium Aluminium Hydroxide Carbonate Hydrate and Aluminium-magnesium-zinc-carbonate-hydroxide respectively.

**Table 1: Formulation of one pack stabilizer system**

| **Formulation** | **OPS / CB1** | **OPS / CB2** | **OPS / CB3** |
|---|---|---|---|
| **Ingredients** | **%** | **%** | **%** |
| Hydrotalcite | 68.8 | 71 | 68.78 |
| Calcium Stearate | 8.72 | 9 | 8.59 |
| Zinc Stearate | 11.24 | 11.6 | 11.17 |
| Rhodia stab 55 p | 0.19 | 1.2 | 1.72 |
| Anox-20 | 1.36 | 3.2 | 4.74 |
| Lauric Acid | 3.88 | 4 | 3.45 |
| TiO2 | *** | *** | 1.48 |
| Finolex - 1200 | *** | *** | 0.1 |
| Calcium Carbonate | 5.81 | *** | *** |

The one pack stabilizer systems namely, CB1A, CB1B,CB1C, CB2A,CB2B, CB2C, CB3A, CB3B and CB3C as well as their corresponding standards namely, CB1 standard-1, CB1standard-2, CB2standard-1, CB2 standard-2, CB3standard-1 and CB3 standard-2 were compounded with PVC as per following Table 2. Compounding Master batches 1 to 15 were prepared by using one pack stabilizer systems namely, CB1A, CB1B,CB1C, CB1standard-1, CB1 standard-2, CB2A,CB2B, CB2C, CB2standard-1, CB2 standard-2,CB3A, CB3B, CB3C, CB3 standard-1 and CB3standard-2 respectively along with other ingredients as per Table 2.

**Table 2: PVC Formulation**

| | |
|---|---|
| PVC (K70) | 100 PHR |
| DOP | 50 PHR |
| Calcium Carbonate | 30 PHR |
| Stearic Acid | 0.5 PHR |
| One pack stabilizer systems | 5 PHR |
| LC 402 WAX | 2 PHR |
| Two roll mill temp | 165°C |

All fifteen compounding master batches were tested for thermal stability, colour hold and electrical properties by preparing the sheet on two roll mill at 165°Cand compared with benchmarking standards. The results are tabulated in Table 3.

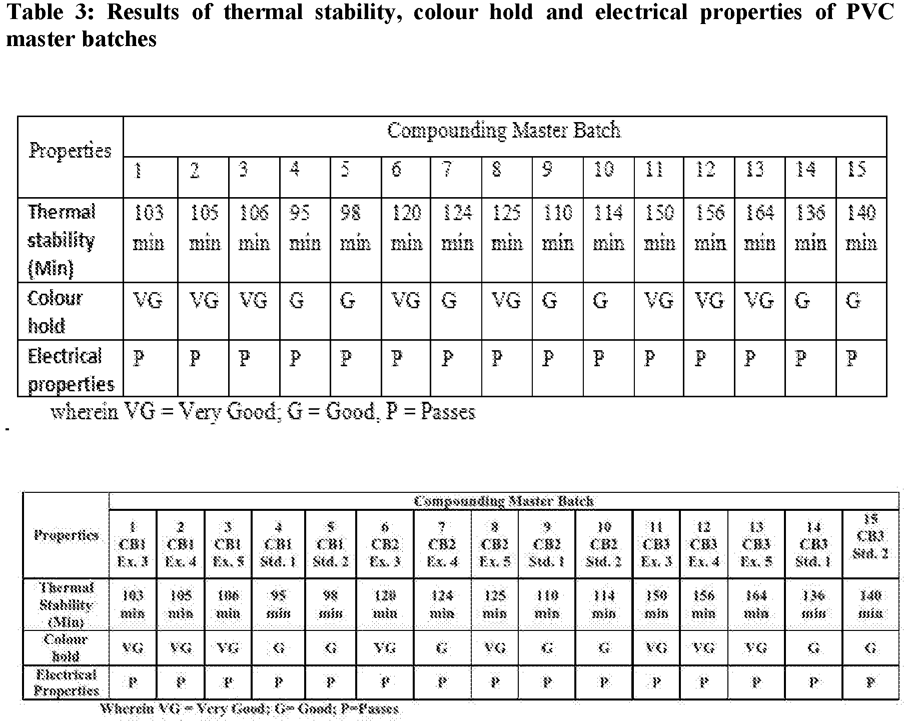

We have given impurities profile, particle size and surface area of synthetic hydrotalcite of the invention prepared according to examples 3, 4 and 5 in the respective Examples. We are also giving herewith impurities profile of standard hydrotalcite namely, Magnesium Aluminium Hydroxide Carbonate Hydrate and Aluminium-magnesium-zinc-carbonate-hydroxide as follows : Chromium 12 PPM , Iron 29 ppm , Cobalt 23 PPM, Nickel < 2 ppm, Particle size 0.47 µm, and BET surface area is 9.5 m2/gm which are used as standard hydrotalcite in the master batch. According to Table 3, master batches with synthetic hydrotalcite of the invention prepared according to examples 3, 4 and 5 give superior results over standard irrespective of higher impurities than that of standard.

Synthetic hydrotalcite of the invention prepared according to examples 1 and 2 as well as standards namely Magnesium Aluminium Hydroxide Carbonate Hydrate and Aluminium-magnesium-zinc-carbonate-hydroxide were used to prepare respective master batches. Master batches 16 to 19 were prepared by using synthetic hydrotalcite of the invention prepared according to examples 1 and 2 as well as standards namely Magnesium Aluminium Hydroxide Carbonate Hydrate and Aluminium-magnesium-zinc-carbonate-hydroxide respectively along with other ingredients as per Table 4.

**Table 4: Polyolefin Formulation**

| Compound | PP Master batch (16) | PP Master batch (17) | PP Master batch (18) | PP Master batch (19) |
|---|---|---|---|---|
| PolyPropylene (H110MA) | 100 gm | 100 gm | 100 gm | 100 gm |
| Irganox 1076 | 750 PPM | 750 PPM | 750 PPM | 750 PPM |
| Irganox 168 | 750 PPM | 750 PPM | 750 PPM | 750 PPM |
| Hydrotalcite (Example 1) | 500 PPM | | | |
| Hydrotalcite (Example 2) | | 500 PPM | | |
| Standard-Magnesium Aluminium Hydroxide Carbonate Hydrate | | | 500 PPM | |
| Standard- Aluminium-magnesium-zinc-carbonate-hydroxide | | | | 500 PPM |

Polypropylene master batches 16 to 17were prepared by adding the standard hydrotalcite and synthetic hydrotalcite of the invention prepared according to example 1 and 2 respectively along with other ingredients according to Table 4. Similarly, we have prepared standard Polypropylene master batches 18 and 19by using standard benchmarking hydrotalcite namely, Magnesium Aluminium Hydroxide Carbonate Hydrate and Aluminium-magnesium-zinc-carbonate-hydroxide(Al-Mg type hydrotalcite)in Polypropylene (H110MA) and other ingredient as per Table 4. All four master batches were extruded in single screw (LABTECH) extruder and tested for yellowness index and Melt Flow Index and comparative results of the same are tabulated in Table 5.

**Table 5: Results of Yellowness Index, Dispersibility and Melt Flow Index**

| **Master Batch of Polypropylene** | **YELLOWNESS INDEX** | | | |
|---|---|---|---|---|
| | **1^{st} Pass** | **2^{nd} Pass** | **3^{rd} Pass** | **4^{th} Pass** |
| **16** | -0.62 | -1.33 | -1.53 | -1.75 |
| **17** | -0.75 | -1.4 | -1.6 | -2.3 |
| **18** | -0.78 | -1.36 | -1.82 | -2.9 |
| **19** | -0.79 | -1.42 | -1.86 | -2.8 |

| | **DISPERSIBILITY** | | | |
|---|---|---|---|---|
| **16** | Good | Good | Good | Good |
| **17** | Good | Good | Good | Good |
| **18** | Good | Good | Good | Good |
| **19** | Good | Good | Good | Good |

| | **MELT FLOW INDEX** | | | |
|---|---|---|---|---|
| **16** | 3.4 | 3.6 | 4.2 | 4.5 |
| **17** | 3.5 | 3.8 | 4.4 | 4.6 |
| **18** | 3.5 | 3.8 | 4.4 | 4.7 |
| **19** | 3.5 | 3.9 | 4.5 | 4.7 |

We have given impurities profile, particle size and surface area of standard hydrotalcite and synthetic hydrotalcite of the invention prepared according to example 1 and 2 in the respective Examples. We are also giving herewith impurities profile of Magnesium Aluminium Hydroxide Carbonate Hydrate and Aluminium-magnesium-zinc-carbonate-hydroxide as follows : Chromium 12 PPM , Iron 29 ppm , Cobalt 23 PPM, Nickel < 2 ppm, Particle size 0.47 µm, and BET surface area is 9.5 m2/gm which are used as standard hydrotalcite in the master batches 18 and 19 respectively. Please note that hydrotalcite prepared according to example 1 is same as that of standard namely Magnesium Aluminium Hydroxide Carbonate Hydrate except impurities profile, particle size and surface area. According to Table 5, master batches16, 17, 18and 19illustrates comparable results. Thus, results emphasize that there is no correlation of impurities profile, particle size and surface area of synthetic hydrotalcite on the properties of the master batches including thermal stability.

## Claims

1. A method for manufacturing of the synthetic hydrotalcite of formula (1):
Mg_{X}Zn_{Y}Ca_{Z}Al₂(OH)₁₃CO₃4H₂O
where X=3-4, Y=0.5-1.5, and Z=0.2-3.5
the said process comprising
a. Reacting Aluminium Chloride with 10 % Magnesium Chloride aqueous solution in 13 : 8 v/v in presence of 10 % sodium carbonate solution in continuous process followed by filtration to obtain a wet cake consisting of Aluminium and Magnesium Carbonate and oxy carbonate containing 13- 15 % of Al₂O₃ and 15 - 20 % of MgO and washing the wet cake with water to remove chloride ions;
b. Preparing homogeneous slurry by mixing the wet cake as obtained in Step (a) in water 0.8:5 wt/v along with 0.25 to 0.75 wt/v of Zinc Hydroxide and 0.04 to 0.40 wt/v of Calcium Carbonate followed by passage through the milling system to reduce the particle size of the slurry to < 5 micron;
c. Mixing slowly the slurry with 50 Litres of 20% caustic lye solution at controlled temperature of 50°C and adding 0 to 0.30 wt/v of Calcium Carbonate to it followed by subjecting the slurry to hydrothermal treatment at temperature of 150 to 170°C and under pressure of 8 Kg for 5 hrs;
d. After hydrothermal treatment, adding 5 % additives like lubricant, plasticizer, dispersing agent to the mixture of Step (c) followed by cooling down to 70°C and filter pressing to obtain a wet cake; and
e. Washing the wet cake with water till pH of the filtrate adjusted to 8 followed by drying the cake in tray dryer to obtain hydrotalcite of formula (1).

2. An "eco-green" method for the manufacture of synthetic hydrotalcite having formula (1);
wherein said process comprises
I. preparing Aluminium Chloride precursor by treating mother liquor of the Copper Phthalocyanine (CPC) Green mainly containing aluminiumchloride, sodium chloride, Cupric Chloride. with sodium sulphide in the molar ratio of 1: 1.2 to get copper as copper sulphide; separating copper sulphide by filtration to obtain clear mother liquor free from copper and other impurities; treating mother liquor with chelating agent or carbon to remove residual inorganic and organic impurities and obtain the filtrate having pure aluminium chloride precursor;
II. preparing 20 % soda ash solution by treating ammonium carbonate solution generated in organic pigment industries such as producers of copper phthalocyanine blue with caustic lye (sodium hydroxide) in an ammonia recovery plant by steam stripping to get 20 % soda ash solution;
III. preparing zinc hydroxide from used waste zinc catalyst by treating it with 20 % solution of sodium hydroxide;
IV. reacting aluminium chloride precursor as obtained in step I and 10 % magnesium chloride aqueous solution in ratio of 13 : 8 v/v and treating the said mixture with 10 % of sodium carbonate solution in continuous process followed by filtration to obtain a wet cake consisting of aluminium and magnesium carbonate and oxy carbonate containing 13- 15 % of Al₂O₃ and 15-20 % of MgO and washing the wet cake with water to remove chloride ions;
V. preparing homogeneous slurry by mixing the wet cake as obtained in Step (1) in water 0.8:5 wt/v along with 0.25 to 0.75 wt/v of Zinc hydroxide and 0.04 to 0.40 wt/v of calcium carbonate followed by passage through the milling system to reduce the particle size of the slurry to < 5 micron;
VI. Mixing slowly the slurry with 50 Litres of 20 % caustic lye solution at controlled temperature of 50°C and adding 0 to 0.30 wt/v of calcium carbonate to it followed by subjecting the slurry to hydrothermal treatment at temperature of 150 to 170°C and under pressure of 8 Kg for 5 hrs;
VII. after hydrothermal treatment, adding 5 % additives like lubricant, plasticizer, dispersing agent to the mixture of Step (VI) followed by cooling down to 70°C and filter pressing to obtain a wet cake; and
VIII. Washing the wet cake with water till pH of the filtrate adjusted to 8 followed by drying the cake in tray dryer to obtain hydrotalcite of formula (1).

## Patentansprüche

1. Verfahren zur Herstellung des synthetischen Hydrotalcits der Formel (1):
Mg_{X}Zn_{Y}Ca_{Z}Al₂(OH)₁₃CO₃4H₂O,
worin X=3-4, Y= 0,5-1,5 und Z=0,2-3,5,
wobei das Verfahren Folgendes umfasst:
a. Umsetzen von Aluminiumchlorid mit einer 10%igen wässrigen Lösung mit 13:8 v/v Magnesiumchlorid in Gegenwart von einer 10%igen Natriumcarbonatlösung in Form eines kontinuierlichen Verfahrens,
gefolgt von Filtration zum Erhalt eines feuchten Kuchens, der aus Aluminium- und Magnesiumcarbonat und Oxycarbonat besteht und 13-15 % Al₂O₃ und 15-20 % MgO enthält, und Waschen des feuchten Kuchens mit Wasser zur Entfernung von Chloridionen;
b. Herstellen einer homogenen Aufschlämmung durch Mischen des wie in Schritt (a) erhaltenen feuchten Kuchens zusammen mit 0,25 bis 0,75 wt/v Zinkhydroxid und 0,04 bis 0,40 wt/v Calciumcarbonat und 0,8:5 wt/v Wasser, gefolgt vom Durchlaufen eines Mahlsystems zur Verringerung der Teilchengröße der Aufschlämmung auf < 5 Mikron;
c. langsames Mischen der Aufschlämmung mit 50 Litern einer 20%igen kaustischen Laugenlösung bei einer bei 50 °C geregelten Temperatur und Dazugeben von 0 bis 0,30 wt/v Calciumcarbonat, gefolgt davon, dass die Aufschlämmung bei einer Temperatur von 150 bis 170 °C und einem Druck von 8 Kg 5 Std. einer Hydrothermalbehandlung ausgesetzt wird;
d. Zugeben von 5 % Additiven wie Schmiermittel, Weichmacher, Dispergiermittel nach der Hydrothermalbehandlung zu der Mischung aus Schritt (c), gefolgt von einem Runterkühlen auf 70 °C und Filterpressen zum Erhalt eines feuchten Kuchens und
e. Waschen des feuchten Kuchens mit Wasser, bis der pH-Wert des Filtrats sich auf 8 eingestellt hat, gefolgt vom Trocknen des Kuchens in einem Hordentrockner zum Erhalt von Hydrotalcit der Formel (1) .

2. "Ökologisch-grünes" Verfahren zur Herstellung von synthetischem Hydrotalcit der Formel (1),
wobei das Verfahren Folgendes umfasst:
I. Herstellen einer Aluminiumchlorid-Vorstufe durch Behandeln von Mutterlauge von Kupferphthalocyaningrün (CPC-Grün), die hauptsächlich Aluminiumchlorid, Natriumchlorid, Kupfer(II)chlorid enthält, mit Natriumsulfid in einem Molverhältnis von 1:1,2 zum Erlangen von Kupfer in Form von Kupfersulfid; Trennen des Kupfersulfids zum Erhalt klarer Mutterlauge, die frei von Kupfer und weiteren Verunreinigungen ist, durch Filtration; Behandeln der Mutterlauge mit einem Chelatbildner oder Kohlenstoff zur Entfernung von verbleibenden anorganischen und organischen Verunreinigungen und zum Erhalt des Filtrats mit der reinen Aluminiumchlorid-Vorstufe;
II. Herstellen einer 20%igen Lösung von Sodaasche durch Behandeln von Ammoniumcarbonatlösungen, die bei der industriellen Erzeugung organischer Pigmente, wie bei der Produktion von Kupferphthalocyaninblau mit kaustischer Lauge (Natriumhydroxid) in einer Ammoniakgewinnungsanlage, anfallen, durch Dampfstrippen zum Erlangen einer 20%igen Lösung von Sodaasche;
III. Herstellen von Zinkhydroxid aus den Abfällen verbrauchter Zinkkatalysatoren, indem diese mit einer 20%igen Natriumhydroxidlösung behandelt werden;
IV. Umsetzen einer wie in Schritt (I) erhaltenen Aluminiumchlorid-Vorstufe mit einer 10%igen wässrigen Lösung mit 13:8 v/v Magnesiumchlorid und Behandeln der Mischung mit einer 10%igen Natriumcarbonatlösung in Form eines kontinuierlichen Verfahrens,
gefolgt von Filtration zum Erhalt eines feuchten Kuchens, der aus Aluminium- und Magnesiumcarbonat und Oxycarbonat besteht und 13-15 % Al₂O₃ und 15-20 % MgO enthält, und Waschen des feuchten Kuchens mit Wasser zur Entfernung von Chloridionen;
V. Herstellen einer homogenen Aufschlämmung durch Mischen des wie in Schritt (1) erhaltenen feuchten Kuchens zusammen mit 0,25 bis 0,75 wt/v Zinkhydroxid und 0,04 bis 0,40 wt/v Calciumcarbonat und 0,8:5 wt/v Wasser, gefolgt vom Durchlaufen eines Mahlsystems zur Verringerung der Teilchengröße der Aufschlämmung auf < 5 Mikron;
VI. langsames Mischen der Aufschlämmung mit 50 Litern einer 20%igen kaustischen Laugenlösung bei einer bei 50 °C geregelten Temperatur und Dazugeben von 0 bis 0,30 wt/v Calciumcarbonat, gefolgt davon, dass die Aufschlämmung bei einer Temperatur von 150 bis 170 °C und einem Druck von 8 Kg 5 Std. einer Hydrothermalbehandlung ausgesetzt wird;
VII. Zugeben von 5 % Additiven wie Schmiermittel, Weichmacher, Dispergiermittel nach der Hydrothermalbehandlung zu der Mischung aus Schritt (VI), gefolgt von einem Runterkühlen auf 70 °C und Filterpressen zum Erhalt eines feuchten Kuchens und
VIII. Waschen des feuchten Kuchens mit Wasser, bis der pH-Wert des Filtrats sich auf 8 eingestellt hat, gefolgt vom Trocknen des Kuchens in einem Hordentrockner zum Erhalt von Hydrotalcit der Formel (1) .

## Revendications

1. Procédé pour la fabrication de l'hydrotalcite synthétique de formule (1) :
Mg_{X}Zn_{Y}Ca_{Z}Al₂(OH)₁₃CO₃4H₂O
où X = 3-4, Y = 0,5-1,5 et Z = 0,2-3,5,
ledit procédé comprenant
a. la réaction de chlorure d'aluminium avec de la solution aqueuse de chlorure de magnésium à 10 % à 13:8 v/v en présence de solution de carbonate de sodium à 10 % dans un processus continu, suivie d'une filtration pour obtenir un gâteau humide constitué de carbonate et oxycarbonate d'aluminium et de magnésium contenant 13-15 % d'Al₂O₃ et 15-20 % de MgO et du lavage du gâteau humide avec de l'eau pour éliminer les ions chlorure ;
b. la préparation de suspension épaisse homogène par mélange du gâteau humide tel qu'obtenu dans l'étape (a) dans de l'eau à 0,8:5 p/v conjointement avec 0,25 à 0,75 p/v d'hydroxyde de zinc et 0,04 à 0,40 p/v de carbonate de calcium, suivie du passage dans le système de broyage pour réduire la taille des particules de la suspension épaisse à < 5 micromètres ;
c. le mélange lent de la suspension épaisse avec 50 litres de solution d'alcali caustique à 20 % à une température régulée de 50 °C et l'ajout de 0 à 0,30 p/v de carbonate de calcium à celle-ci, suivis du fait de soumettre la suspension épaisse à un traitement hydrothermique à une température de 150 à 170 °C et sous une pression de 8 kg pendant 5 h ;
d. après traitement hydrothermique, l'ajout de 5 % d'additifs comme un lubrifiant, un plastifiant, un agent dispersant au mélange de l'étape (c), suivi d'un refroidissement à 70 °C et d'une filtration sur filtre-presse pour obtenir un gâteau humide ; et
e. le lavage du gâteau humide avec de l'eau jusqu'à ce que le pH du filtrat soit ajusté à 8, suivi du séchage du gâteau dans un séchoir à plateaux pour obtenir de l'hydrotalcite de formule (1).

2. Procédé « éco-vert » pour la fabrication d'hydrotalcite synthétique répondant à la formule (1) ; ledit procédé comprenant
I. la préparation de précurseur de chlorure d'aluminium par traitement de liqueur mère du vert de phtalocyanine de cuivre (CPC) contenant principalement du chlorure d'aluminium, du chlorure de sodium, du chlorure cuivrique, avec du sulfure de sodium en un rapport molaire de 1:1,2 pour obtenir du cuivre sous forme de sulfure de cuivre ; la séparation de sulfure de cuivre par filtration pour obtenir de la liqueur mère transparente exempte de cuivre et d'autres impuretés ; le traitement de la liqueur mère avec un agent chélatant ou du carbone pour éliminer des impuretés inorganiques et organiques résiduelles et obtenir le filtrat renfermant du précurseur de chlorure d'aluminium pur ;
II. la préparation de solution de carbonate de soude à 20 % par traitement de solution de carbonate d'ammonium produite dans des industries de pigments organiques telles que des producteurs de bleu de phtalocyanine de cuivre avec de l'alcali caustique (hydroxyde de sodium) dans une installation de récupération d'ammoniac par extraction à la vapeur d'eau pour obtenir de la solution de carbonate de soude à 20 % ;
III. la préparation de hydroxyde de zinc à partir de catalyseur au zinc de rebut usé par traitement de celui-ci avec de la solution d'hydroxyde de sodium à 20 % ;
IV. la réaction de précurseur de chlorure d'aluminium tel qu'obtenu dans l'étape I et de solution aqueuse de chlorure de magnésium à 10 % en un rapport de 13:8 v/v et le traitement dudit mélange avec 10 % de solution de carbonate de sodium dans un processus continu, suivis d'une filtration pour obtenir un gâteau humide constitué de carbonate et oxycarbonate d'aluminium et de magnésium contenant 13-15 % d'Al₂O₃ et 15-20 % de MgO et du lavage du gâteau humide avec de l'eau pour éliminer les ions chlorure ;
V. la préparation de suspension épaisse homogène par mélange du gâteau humide tel qu'obtenu dans l'étape (1) dans de l'eau à 0,8:5 p/v conjointement avec 0,25 à 0,75 p/v d'hydroxyde de zinc et 0,04 à 0,40 p/v de carbonate de calcium, suivie du passage dans le système de broyage pour réduire la taille des particules de la suspension épaisse à < 5 micromètres ;
VI. le mélange lent de la suspension épaisse avec 50 litres de solution d'alcali caustique à 20 % à une température régulée de 50 °C et l'ajout de 0 à 0,30 p/v de carbonate de calcium à celle-ci, suivis du fait de soumettre la suspension épaisse à un traitement hydrothermique à une température de 150 à 170 °C et sous une pression de 8 kg pendant 5 h ;
VII. après traitement hydrothermique, l'ajout de 5 % d'additifs comme un lubrifiant, un plastifiant, un agent dispersant au mélange de l'étape (VI), suivi d'un refroidissement à 70 °C et d'une filtration sur filtre-presse pour obtenir un gâteau humide ; et
VIII. le lavage du gâteau humide avec de l'eau jusqu'à ce que le pH du filtrat soit ajusté à 8, suivi du séchage du gâteau dans un séchoir à plateaux pour obtenir de l'hydrotalcite de formule (1).
